# EUROPÄISCHE PATENTSCHRIFT

(11) **EP 0 602 512 B1**
(45) Veröffentlichungstag und Bekanntmachung des Hinweises auf die Patenterteilung: **12.03.1997**
(21) Anmeldenummer: 93119725.5
(22) Anmeldetag: 08.12.1993
(51) Int. Cl.: C08F 2/34, C08F 210/04, C08F 297/08, C08F 210/06

(54) **Copolymerisate des Propylens mit verringerter Weissbruchneigung**
Propylene copolymers with reduced tendency to stress whitening
Copolymères de propylène ayant une tendance réduite à la rupture blanche

(30) Priorität: 14.12.1992 DE 4242056
(43) Veröffentlichungstag der Anmeldung: 22.06.1994
(73) Patentinhaber: BASF Aktiengesellschaft, 67063 Ludwigshafen (DE)
(72) Erfinder: Mueller, Patrik, Dr., D-67661 Kaiserslautern (DE); Schwager, Harald, Dr., D-67346 Speyer (DE); Hungenberg, Klaus-Dieter, Dr., D-69488 Birkenau (DE); Overthun, Klaus, D-67136 Fussgoenheim (DE)

(56) Entgegenhaltungen:
- EP-A- 0 131 268
- EP-A- 0 276 734
- DE-A- 4 004 087

## Beschreibung

Die vorliegende Erfindung betrifft Copolymerisate des Propylens mit Alk-1-enen, erhältlich durch zweistufige Polymerisation aus der Gasphase heraus in einem bewegten Festbett, mittels eines Ziegler-Natta-Katalysatorsystems, welches neben einer geträgerten titanhaltigen Feststoffkomponente noch als Cokatalysatoren eine Aluminiumverbindung und eine siliciumorganische Verbindung enthält, wobei man
a) in der ersten Polymerisationsstufe bei einem Druck von 15 bis 40 bar, einer Temperatur von 60 bis 90°C und einer mittleren Verweilzeit des Reaktionsgemisches von 0,7 bis 5 Stunden, Propylen zusammen mit einem weiteren Alk-1-en in Anwesenheit von Wasserstoff polymerisiert und dabei das Verhältnis zwischen dem Partialdruck des Propylens und dem des weiteren Alk-1-ens auf 10:1 bis 500:1, sowie das zwischen dem Partialdruck des Propylens und dem des Wasserstoffs auf 30:1 bis 180:1 einstellt und anschließend
b) in einer zweiten Polymerisationsstufe bei einem Druck von 5 bis 25 bar, wobei dieser Druck wenigstens 3 bar unter dem Druck der ersten Polymerisationsstufe liegt, einer Temperatur von 40 bis 90°C und einer mittleren Verweilzeit des Reaktionsgemisches von 0,7 bis 5 Stunden, dem aus der ersten Polymerisationsstufe ausgebrachten Polymerisat Propylen und weiteres Alk-1-en in Anwesenheit von Wasserstoff hinzupolymerisiert, dabei das Verhältnis der Partialdrücke zwischen Propylen und dem des weiteren Alk-1-ens auf 0,3:1 bis 10:1, das zwischen Propylen und Wasserstoff auf 4:1 bis 1:1 und das Gewichtsverhältnis zwischen den in der ersten und den in der zweiten Polymerisationsstufe umgesetzten Monomeren auf 0,5:1 bis 20:1 einstellt.

Außerdem betrifft die Erfindung ein Verfahren zur Herstellung dieser Copolymerisate, deren Verwendung als Folien und Formkörper, sowie Mischungen aus diesen Copolymerisaten und Nukleierungsmitteln.

Durch Polymerisation an Ziegler-Natta-Katalysatoren erhältliche Propylen-Ethylen-Copolymerisate sind bereits in einer Reihe von Patentschriften beschrieben worden. Aus der US-A 4 260 710 ist bekannt, Homo- und Copolymerisate von α-Olefinen durch Polymerisation mit Hilfe von Ziegler-Natta-Katalysatoren in einem Rührkessel herzustellen. Die dabei verwendeten Katalysatorkomponenten enthalten u.a. Verbindungen des mehrwertigen Titans, Aluminiumhalogenide und/oder -alkyle, sowie Elektronendonorverbindungen, wobei meistens Silane, Ester, Ether, Ketone oder Lactone verwendet werden (EP-B 14 523, EP-B 45 977, EP-B 86 473, US-A 4 857 613, EP-A 171 200).

Des weiteren sind eine Reihe von Verfahren zur Darstellung von Propylen-Ethylen-Blockcopolymeren mit Hilfe eines Ziegler-Natta-Katalysatorsystems bekannt (US-A 4 454 299, US-A 4 455 405, ZA-B 0084/3561, ZA-B 0084/3563, ZA-B 0084/5261, GB-B 1 032 945, DE-A 38 27 565), bei denen man zunächst gasförmiges Propylen in einer ersten Reaktionszone polymerisiert und das daraus erhältliche Homopolymerisat anschließend in eine zweite Reaktionszone bringt, wo ein Gemisch aus Ethylen und Propylen hinzupolymerisiert wird. Das Verfahren wird gewöhnlich bei erhöhtem Druck und in Anwesenheit von Wasserstoff als Molmassenregler durchgeführt. Die dabei erhältlichen Copolymerisate weisen meist eine ausgezeichnete Schlagzähigkeit, zugleich aber eine relativ hohe Neigung zum Weißbruch auf. Unter Weißbruch versteht man dabei die an vielen Kunststoffen während der Verstreckung auftretende Weißfärbung der vorher transparenten Probe in einzelnen Bereichen.

In der DE-A 4 004 087 wird die Herstellung eines Copolymerisats des Propylens beschrieben, wobei zunächst in einer ersten Polymerisationsstufe Propylen zusammen mit einem weiteren Alk-1-en polymerisiert wird und anschließend in einer zweiten Polymerisationsstufe dem aus der ersten Polymerisationsstufe erhaltenen Polymerisat ein Gemisch aus Propylen und einem weiteren Alk-1-en hinzupolymerisiert wird. Das dabei verwendete Verfahren wird in der Gasphase und in Anwesenheit eines Ziegler-Natta-Katalysatorsystems durchgeführt. Die daraus erhaltenen Copolymerisate des Propylens zeichnen sich u.a. durch eine gute Kerbschlagzähigkeit, eine hohe Schüttdichte und eine niedrige Neigung zum Weißbruch aus.

Die aus der DE-A 40 04 087 bekannten Copolymerisate des Propylens sind jedoch für einige Anwendungsbereiche häufig nicht genügend transparent und in Bezug auf ihre Neigung zum Weißbruch noch verbesserungsfähig, was ihre Einsatzmöglichkeiten für bestimmte Bereiche einschränkt. Dazu zählen beispielsweise der Haushaltsbereich, wo insbesondere die optischen Eigenschaften von Polymerisaten von großer Bedeutung sind.

Der vorliegenden Erfindung lag daher die Aufgabe zugrunde, ausgehend von der DE-A 4 004 087 neue Copolymerisate des Propylens zu entwickeln, die sich durch verbesserte anwendungstechnische Eigenschaften, insbesondere durch eine verringerte Neigung zum Weißbruch auszeichnen.

Demgemäß wurden die eingangs definierten neuen Propylen-Copolymerisate gefunden.

Das zu diesen Copolymerisaten führende Verfahren kann in den üblichen, für die Polymerisation von Propylen verwendeten Reaktoren entweder absatzweise oder bevorzugt kontinuierlich durchgeführt werden. Geeignete Reaktoren sind u.a. kontinuierlich betriebene Rührkessel, wobei man meistens eine Reihe von mehreren hintereinander geschalteten Rührkesseln einsetzt. Die Reaktoren enthalten ein Festbett aus feinteiligem Polymerisat, welches üblicherweise durch Rühren in Bewegung gehalten wird.

Das Verfahren kann mit den in der Polymerisationstechnik üblichen Ziegler-Natta-Katalysatoren durchgeführt werden. Diese enthalten u.a. neben einer titanhaltigen Feststoffkomponente noch einen Cokatalysator. Als Cokatalysator kommt dabei eine Aluminiumverbindung in Frage. Vorzugsweise wird neben dieser Aluminiumverbindung als weiterer Bestandteil des Cokatalysators noch eine Elektronendonorverbindung eingesetzt.

Zur Herstellung der titanhaltigen Feststoffkomponente werden als Titanverbindungen im allgemeinen Halogenide oder Alkoholate des drei- oder vierwertigen Titans verwendet, wobei die Chloride des Titans, insbesondere Titantetrachlorid, bevorzugt sind. Vorteilhaft enthält die titanhaltige Feststoffkomponente einen feinteiligen Träger, wofür sich Silicium- und Aluminiumoxide, sowie Aluminiumsilicate und Aluminiumphosphat gut bewährt haben. Als besonders bevorzugter Träger wird SiO₂·aAl₂O₃ verwendet, wobei a für einen Wert von 0 bis 2, insbesondere von 0 bis 0,5 steht. Die als Träger verwendeten Stoffe können bis zu 10 Gew.-% Wasser enthalten.

Weiter werden bei der Herstellung der titanhaltigen Feststoffkomponente u.a. Verbindungen des Magnesiums eingesetzt. Als solche kommen insbesondere Magnesiumhalogenide, Magnesiumalkyle und Magnesiumaryle, sowie Magnesiumalkoxy- und Magnesiumaryloxyverbindungen in Betracht, wobei bevorzugt Magnesiumdichlorid, Magnesiumdibromid und Magnesiumdi-(C₁-C₁₀-alkyl)-Verbindungen verwendet werden. Daneben kann die titanhaltige Feststoffkomponente noch Halogen, bevorzugt Chlor oder Brom, enthalten.

Außerdem enthält die titanhaltige Feststoffkomponente noch Elektronendonorverbindungen, beispielsweise mono- oder polyfunktionelle Carbonsäuren, Carbonsäureanhydride und Carbonsäureester, Ketone, Ether, Alkohole, Lactone, sowie phosphor- und siliciumorganische Verbindungen. Bevorzugt werden als Elektronendonorverbindungen innerhalb der titanhaltigen Feststoffkomponente Phthalsäurederivate der allgemeinen Formel I 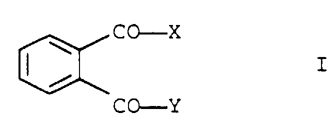 verwendet, wobei X und Y jeweils für Chlor oder einen C₁- bis C₁₀-Alkoxyrest oder gemeinsam für Sauerstoff stehen. Besonders bevorzugte Elektronendonorverbindungen sind Phthalsäureester, wobei X und Y C₁-C₈-Alkoxyreste, beispielsweise Methoxy-, Ethoxy-, Propyloxy- oder Butyloxyreste bedeuten.

Weiter bevorzugte Elektronendonorverbindungen innerhalb der titanhaltigen Feststoffkomponente sind u.a. Diester von 3- oder 4-gliedrigen, gegebenenfalls substituierten Cycloalkyl-1,2-dicarbonsäuren, sowie Monoester von, gegebenenfalls substituierten Benzophenon-2-carbonsäuren.Als Hydroxyverbindungen werden bei diesen Estern die bei Veresterungsreaktionen üblichen Alkohole verwendet, u.a. C₁- bis C₁₅-Alkanole, C₅- bis C₇-Cycloalkanole, die ihrerseits C₁- bis C₁₀-Alkylgruppen tragen können, ferner C₆-bis C₁₀-Phenole.

Die titanhaltige Feststoffkomponente kann nach an sich bekannten Methoden hergestellt werden. Beispiele dafür sind u.a. in der EP-A 45 975, der EP-A 45 977, der EP-A 86 473, der EP-A 171 200, der US-A 4 857 613, der GB-A 2 111 066 und der DE-A 40 04 087 beschrieben.

Die titanhaltige Feststoffkomponente wird mit einem Cokatalysator als Ziegler-Natta-Katalysatorsystem verwendet. Als Cokatalysatoren kommen dabei Aluminiumverbindungen in Betracht.

Geeignete Aluminiumverbindungen sind neben Trialkylaluminium auch solche Verbindungen, bei denen eine Alkylgruppe durch eine Alkoxygruppe oder durch ein Halogenatom, beispielsweise durch Chlor oder Brom, ersetzt ist. Bevorzugt werden Trialkylaluminiumverbindungen verwendet, deren Alkylgruppen jeweils 1 bis 8 C-Atome aufweisen, beispielsweise Trimethyl-, Triethyl- oder Methyldiethylaluminium.

Bevorzugt verwendet man neben der Aluminiumverbindung noch als weiteren Cokatalysator Elektronendonorverbindungen wie beispielsweise mono- oder polyfunktionelle Carbonsäuren, Carbonsäureanhydride und Carbonsäureester, Ketone, Ether, Alkohole, Lactone, sowie phosphor- und siliciumorganische Verbindungen. Bevorzugte Elektronendonorverbindungen sind dabei siliciumorganische Verbindungen, insbesondere solche der allgemeinen Formel II

R¹ ₙSi(OR²)₄₋ₙ II

wobei R¹ gleich oder verschieden ist und eine C₁- bis C₂₀-Alkylgruppe, eine 5- bis 7-gliedrige Cycloalkylgruppe, die ihrerseits eine C₁- bis C₁₀-Alkylgruppe tragen kann, oder eine C₆- bis C₂₀-Aryl- oder Arylalkylgruppe bedeutet, R² gleich oder verschieden ist und eine C₁- bis C₂₀-Alkylgruppe bezeichnet und n für die Zahlen 1, 2 oder 3 steht. Besonders bevorzugt werden dabei solche Verbindungen, in denen R¹ gleich oder verschieden ist und eine C₁-bis C₈-Alkylgruppe oder eine 5- bis 7-gliedrige Cycloalkylgruppe, R² gleich oder verschieden ist und eine C₁- bis C₄-Alkylgruppe und n die Zahlen 1 oder 2 bedeutet.

Unter diesen Verbindungen sind Dimethoxydiisopropylsilan, Dimethoxyisobutylisopropylsilan, Dimethoxydiisobutylsilan, Dimethoxydicyclopentylsilan, Diethoxyisobutylisopropylsilan, Dimethoxyisobutylsek.butylsilan und Dimethoxyisopropylsek.butylsilan hervorzuheben.

Bevorzugt werden solche Katalysatorsysteme verwendet, bei denen das Atomverhältnis zwischen Aluminium aus der Aluminiumverbindung und Titan aus der titanhaltigen Feststoffkomponente 10:1 bis 800:1, insbesondere 20:1 bis 200:1, und das Molverhältnis zwischen der Aluminiumverbindung und der als Cokatalysator eingesetzten Elektronendonorverbindung 1:1 bis 100:1, insbesondere 2:1 bis 80:1 beträgt. Die Katalysatorbestandteile können in beliebiger Reihenfolge einzeln oder als Gemisch der Komponenten in das Polymerisationssystem eingebracht werden.

Die Polymerisation wird in der ersten Polymerisationsstufe bei einem Druck von 15 und 40 bar, einer Temperatur von 50 bis 90°C und einer mittleren Verweilzeit des Reaktionsgemisches von 0,7 bis 5 Stunden durchgeführt. Bevorzugt sind dabei Drücke von 20 bis 35 bar, Temperaturen von 65 bis 85°C und mittlere Verweilzeiten von 0,8 bis 4 Stunden. Bevorzugt wählt man die Reaktionsbedingungen so, daß in der ersten Polymerisationsstufe pro mmol der Aluminiumkomponente 0,05 bis 2 kg, bevorzugt 0,1 bis 1,5 kg, eines Propylen-Copolymerisats gebildet werden. Als Comonomer wird dabei ein Alk-1-en verwendet, beispielsweise Ethylen, But-1-en, Pent-1-en, Hex-1-en, Hept-1-en oder Oct-1-en oder ein Gemisch aus mehreren Alk-1-enen. Bevorzugte Comonomere sind Ethylen und But-1-en. In der ersten Polymerisationsstufe wird das Verhältnis zwischen dem Partialdruck des Propylens und dem des Alk-1-ens üblicherweise auf 10:1 bis 500:1, insbesondere auf 15:1 bis 200:1, eingestellt. Wird in der ersten Polymerisationsstufe ein Comonomerengemisch aus Propylen, Ethylen und einem C₄-C₁₀-Alk-1-en verwendet, so sollte das Verhältnis der Partialdrücke zwischen Ethylen und dem C₄-C₁₀-Alk-1-en auf 20:1 bis 1:10, insbesondere auf 10:1 bis 1:5 eingestellt werden. Die Polymerisation wird dabei in Anwesenheit von Wasserstoff durchgeführt, wobei ein Partialdruckverhältnis zwischen Propylen und Wasserstoff von 30:1 bis 180:1, insbesondere von 30:1 bis 150:1 eingestellt wird.

Das hierbei erhältliche Copolymerisat des Propylens wird nach Beendigung der Reaktion zusammen mit dem Katalysator aus der ersten Polymerisationsstufe ausgetragen und in die zweite Polymerisationsstufe eingeführt, wo diesem ein Gemisch von Propylen und weiteren Alk-1-enen hinzupolymerisiert wird.

Darunter werden neben Ethylen und But-1-en insbesondere noch Pent-1-en, Hex-1-en, Hept-1-en und Oct-1-en verstanden, wobei Ethylen und But-1-en bevorzugt verwendet werden. Dabei kann das Propylen sowohl mit einem Alk-1-en als auch mit einem Gemisch aus Ethylen und einem C₄-C₁₀-Alk-1-en dem aus der ersten Polymerisationsstufe ausgebrachten Copolymerisat hinzupolymerisiert werden. Vorzugsweise wird in der zweiten Polymerisationsstufe entweder ein Gemisch aus Propylen und Ethylen oder ein Gemisch aus Propylen, Ethylen und But-1-en umgesetzt. Die Menge der jeweils eingesetzten Monomere ist dabei so zu bemessen, daß das Verhältnis der Partialdrücke zwischen Propylen und den weiteren Alk-1-enen im Bereich von 0,3:1 bis 10:1, insbesondere im Bereich von 0,3:1 bis 3:1, liegt. Für den Fall, daß in der zweiten Polymerisationsstufe ein Gemisch aus Propylen, Ethylen und einem C₄-C₁₀-Alk-1-en copolymerisiert wird, ist ferner dafür zu sorgen, daß das Verhältnis der Partialdrücke zwischen Ethylen und dem C₄-C₁₀-Alk-1-en auf 2:1 bis 100:1, insbesondere auf 5:1 bis 50:1 eingestellt wird. Durch geeignete Wahl der Reaktionsparameter sollte außerdem darauf geachtet werden, daß das Gewichtsverhältnis zwischen den in der ersten und den in der zweiten Polymerisationsstufe umgesetzten Monomeren im Bereich von 0,5:1 bis 20:1, insbesondere im Bereich von 1,0:1 bis 15:1, liegt. Die Polymerisation erfolgt in der zweiten Polymerisationsstufe bei einem Druck von 5 bis 25 bar, einer Temperatur von 40 bis 90°C und einer mittleren Verweilzeit des Reaktionsgemisches von 0,7 bis 5 Stunden. Bevorzugt sind dabei Drücke von 10 bis 25 bar, Temperaturen von 40 bis 80°C und mittlere Verweilzeiten von 0,8 bis 4 Stunden. Dabei sollte der Druck in der zweiten Polymerisationsstufe wenigstens 3 bar unter dem Druck der ersten Polymerisationsstufe liegen. Die Polymerisation erfolgt auch in der zweiten Polymerisationsstufe in Anwesenheit von Wasserstoff, wobei bei einem Partialdruckverhältnis zwischen Propylen und Wasserstoff von 4:1 bis 1:1, insbesondere von 3:1 bis 1:1 gearbeitet wird.

Weiterhin kann es sich empfehlen, dem Reaktionsgemisch der zweiten Polymerisationsstufe ein C₁- bis C₈-Alkanol, insbesondere ein C₁-C₄-Alkanol, hinzufügen, welches die Aktivität des Ziegler-Natta-Katalysators beeinflußt. Dafür gut geeignete Alkanole sind u.a. Methanol, Ethanol, n-Propanol, n-Butanol und ganz besonders Isopropanol. Die Menge des C₁-C₈-Alkanols wird dabei zweckmäßigerweise so bemessen, daß das Molverhältnis zwischen dem C₁-C₈-Alkanol und der als Cokatalysator dienenden Aluminiumverbindung 0,01:1 bis 10:1, insbesondere 0,02:1 bis 5:1, beträgt.

Die mittleren Molmassen der dabei erhältlichen erfindungsgemäßen Copolymerisate des Propylens liegen zwischen 10 000 bis 1 000 000, die Schmelzflußindices zwischen 0,1 bis 100 g/10 min, vorzugsweise zwischen 0,2 bis 20 g/10 min, jeweils gemessen nach DIN 53 735 bei 230°C und 2,16 kg. Der Schmelzflußindex entspricht dabei der Menge an Polymerisat, die innerhalb von 10 Minuten aus der nach DIN 53 735 genormten Prüfvorrichtung bei einer Temperatur von 230°C und unter einem Gewicht von 2,16 kg ausgepreßt wird. Die erhaltenen Copolymerisate des Propylens weisen neben einer guten Kerbschlagzähigkeit eine hohe Schüttdichte und eine sehr niedrige Neigung zum Weißbruch auf. Darüber hinaus zeichnen sich die erfindungsgemäßen Copolymerisate des Propylens u.a. auch durch eine hohe Transparenz aus.

Zur weiteren Steigerung der Transparenz können die erfindungsgemäßen Copolymerisate des Propylens noch mit 0,01 bis 1,0 Gew.-Teilen, insbesondere mit 0,1 bis 0,5 Gew.-Teilen, bezogen auf 100 Gew.-Teile Copolymerisat, eines Nukleierungsmittels vermengt werden. Als Nukleierungsmittel für diese ebenfalls erfindungsgemäßen Mischungen eignen sich u.a. Dibenzylidensorbitol, C₁-C₈-alkylsübstituiertes Dibenzylidensorbitol, Feintalkum oder aber Salze von Diestern der Phosphorsäure. Bevorzugt ist dabei Dibenzylidensorbitol.

Aufgrund ihrer guten mechanischen und optischen Eigenschaften eignen sich die erfindungsgemäßen Copolymerisate des Propylens u.a. zur Herstellung von Folien, Rohren, Belägen, Fasern, Hohlkörpern, Spritzgußartikeln und von Formkörpern, insbesondere für den Haushaltsbereich.

### Beispiele 1 bis 3 und Vergleichsversuche A und B

Das Verfahren wurde in allen Beispielen 1 bis 3 und in den Vergleichsversuchen A und B in zwei hintereinander geschalteten Rührautoklaven mit einem Nutzvolumen von jeweils 180 l in Anwesenheit von Wasserstoff als Molekulargewichtsregler durchgeführt. Beide Reaktoren enthielten ein bewegtes Festbett aus feinteiligem Polypropylen.

In den ersten Polymerisationsreaktor wurden die jeweiligen Comonomere, d.h. Propylen und Ethylen gasförmig eingeleitet und bei einer mittleren Verweilzeit von 2 Stunden mit Hilfe eines Ziegler-Natta-Katalysators polymerisiert. Die genauen Versuchsbedingungen, das Verhältnis der Partialdrücke der Comonomere und das zwischen Propylen und Wasserstoff sowie das Gewichtsverhältnis zwischen den in der ersten und den in der zweiten Polymerisationsstufe umgesetzten Monomeren sind für alle Beispiele und die Vergleichsversuche A und B in der Tabelle 1 wiedergegeben.

In allen Versuchen erfolgte die Polymerisation kontinuierlich mit Hilfe eines Ziegler-Natta-Katalysators, wobei pro Stunde 1 g einer titanhaltigen Feststoffkomponente, 60 mmol Triethylaluminium und 6 mmol Dimethoxyisobutylisopropylsilan als Katalysatorbestandteile verwendet wurden. Dabei wurden pro mmol der Aluminiumverbindung in der ersten Polymerisationszone 0,35 kg Propylen-Copolymerisat erzeugt.

Das im ersten Reaktor gebildete Propylen-Copolymerisat wurde anschließend zusammen mit dem Katalysator in den zweiten Rührautoklaven übergeführt und dort bei einer Verweilzeit von 1,8 Stunden dem Copolymerisat ein Gemisch von Propylen und Ethylen hinzupolymerisiert. Die genauen Versuchsbedingungen und das Verhältnis der Partialdrücke zwischen den einzelnen Comonomeren und zwischen Propylen und Wasserstoff sind für alle Beispiele in der Tabelle 2 wiedergegeben.

Die titanhaltige Feststoffkomponente wurde nach folgendem Verfahren hergestellt.

Dazu versetzte man in einer ersten Stufe SiO₂, welches einen Teilchendurchmesser von 20 bis 45 mm, ein Porenvolumen von 1,75 cm³/g und eine Oberfläche von 320 m²/g aufwies, mit in n-Heptan gelöstem Butyl-octylmagnesium, wobei pro Mol SiO₂ , 0,3 mol der Magnesiumverbindung eingesetzt wurden. Die Lösung wurde 1,5 Stunden lang bei 90°C gerührt, danach auf 20°C abgekühlt, und anschließend wurde die 10-fache molare Menge, bezogen auf die magnesiumorganische Verbindung, an Chlorwasserstoff eingeleitet. Nach 30 Minuten trennte man das festphasige Produkt vom Lösungsmittel ab.

Das aus der ersten Stufe erhältliche Produkt wurde mit n-Heptan versetzt und anschließend wurde unter ständigem Rühren 3 mol Ethanol, bezogen auf 1 mol Magnesium, hinzugefügt. Dieses Gemisch wurde 1,5 Stunden bei 80°C gerührt und danach mit 6 mol Titantetrachlorid und 0,5 mol Phthalsäuredi-n-butylester, jeweils bezogen auf 1 mol Magnesium, versetzt. Das Reaktionsgemisch wurde weitere zwei Stunden gerührt, wonach der Feststoff vom Lösungsmittel durch Filtration abgetrennt wurde.

Das so erhaltene Produkt extrahierte man zwei Stunden lang bei 125°C mit einer 15 gewichtsprozentigen Lösung von Titantetrachlorid in Ethylbenzol. Danach wurde das Festprodukt durch Filtration vom Extraktionsmittel getrennt und solange mit n-Heptan gewaschen, bis dieses nur mehr 0,3 Gew.-% Titantetrachlorid enthielt.

Die daraus resultierende titanhaltige Feststoffkomponente enthielt 3,1 Gew.-% Titan, 7,5 Gew.-% Magnesium und 28,3 Gew.-% Chlor.

Die Eigenschaften der mit Hilfe dieses Ziegler-Natta-Katalysatorsystems erhaltenen Copolymerisate des Propylens sind für alle Versuche in der nachstehenden Tabelle 3 wiedergegeben. Dabei werden der Schmelzflußindex und die Schüttdichte für die aus der zweiten Polymerisationszone ausgebrachten Copolymerisate aufgeführt. Die Tabelle enthält ferner für alle Versuche die jeweiligen Werte für die Kerbschlagzähigkeit, die Steifigkeit (Schubmodul), den Weißbruch, den Schmelzpunkt und die Transparenz (Haze).

### Bestimmung des Weißbruchs:

Der Weißbruch wurde mit Hilfe einer Fallbolzenapparatur nach DIN 53 443 Teil 1 ermittelt, wobei ein Fallbolzen mit einer Masse von 250 g, einem Stoßkörper mit 5 mm Durchmesser und einem Kalottenradius von 25 mm verwendet wurde. Die Fallhöhe betrug 50 cm.

Als Probekörper wurde eine spritzgegossene Rundscheibe mit einem Durchmesser von 60 mm und einer Dicke von 2 mm verwendet. Der Probekörper wurde bei einer Massetemperatur von 250°C und einer Werkzeugoberflächentemperatur von 30°C spritzgegossen.

Die Prüfung erfolgte bei einer Temperatur von 23°C, wobei jeder Probekörper nur jeweils einem Stoßversuch unterworfen wurde. Dabei wurde zunächst der Probekörper auf einen Auflagering gelegt, ohne daß dieser eingespannt wurde, und anschließend wurde der Fallbolzen ausgelöst. Zur Mittelwertbildung wurden jeweils 5 Probekörper geprüft.

Der Durchmesser der sichtbaren Weißbruchmarkierung ist in mm angegeben und wurde dadurch ermittelt, daß man diesen auf der dem Stoß abgewandten Seite der Rundscheibe in Fließrichtung und senkrecht dazu maß und aus beiden Werten den Mittelwert bestimmte.

### Bestimmung der Transparenz (Haze):

Die Transparenz (Haze) der einzelnen Copolymerisate wurde an spritzgegossenen 1 mm dicken Rundscheiben nach ASTM D 1003 ermittelt.

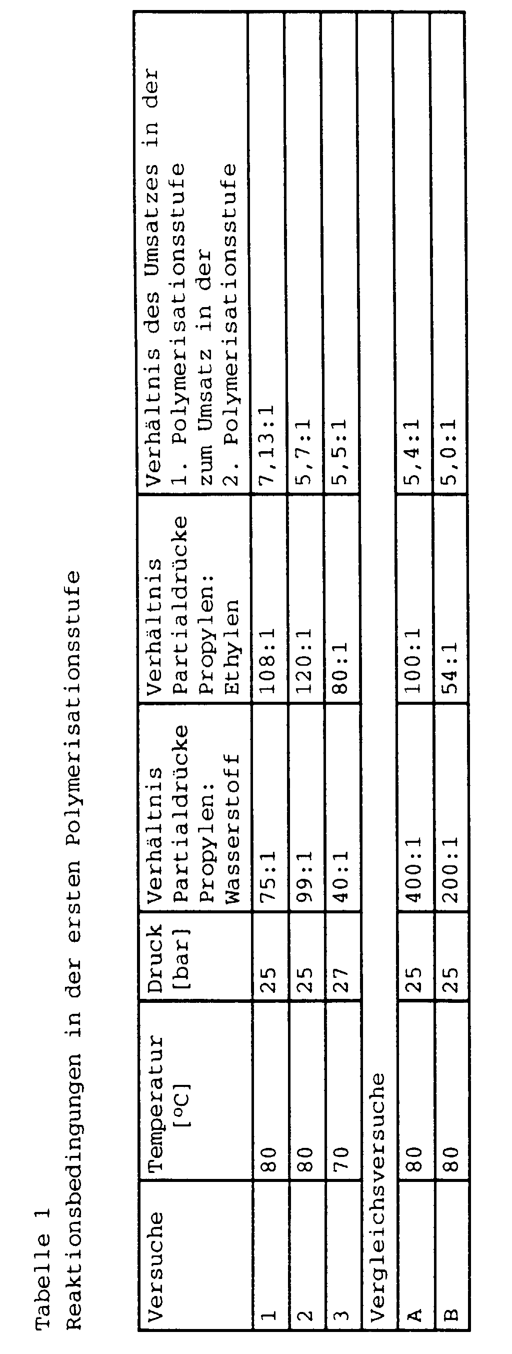

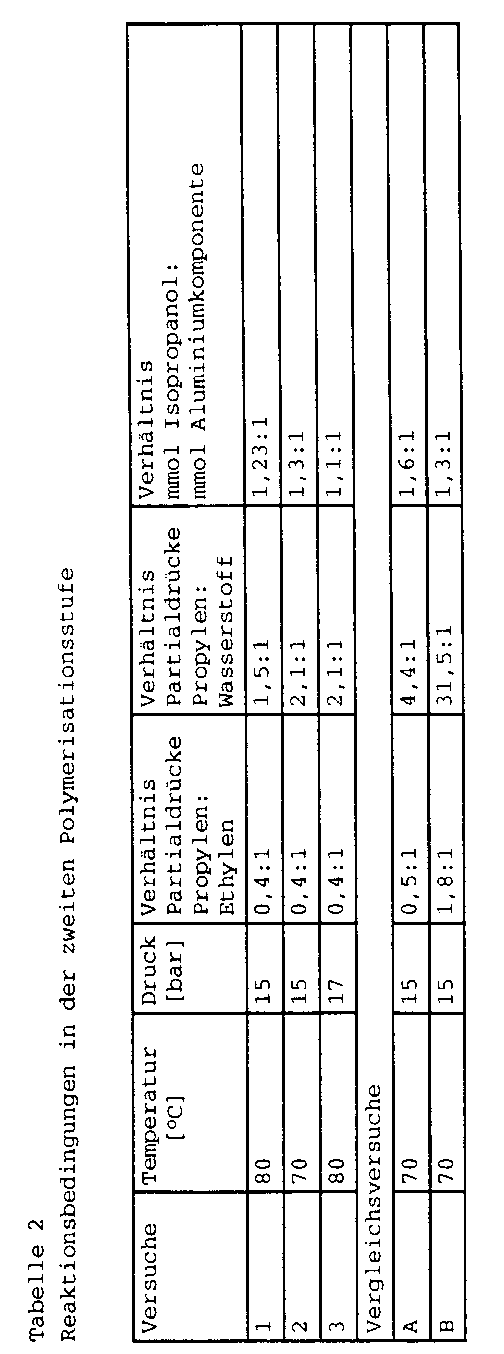

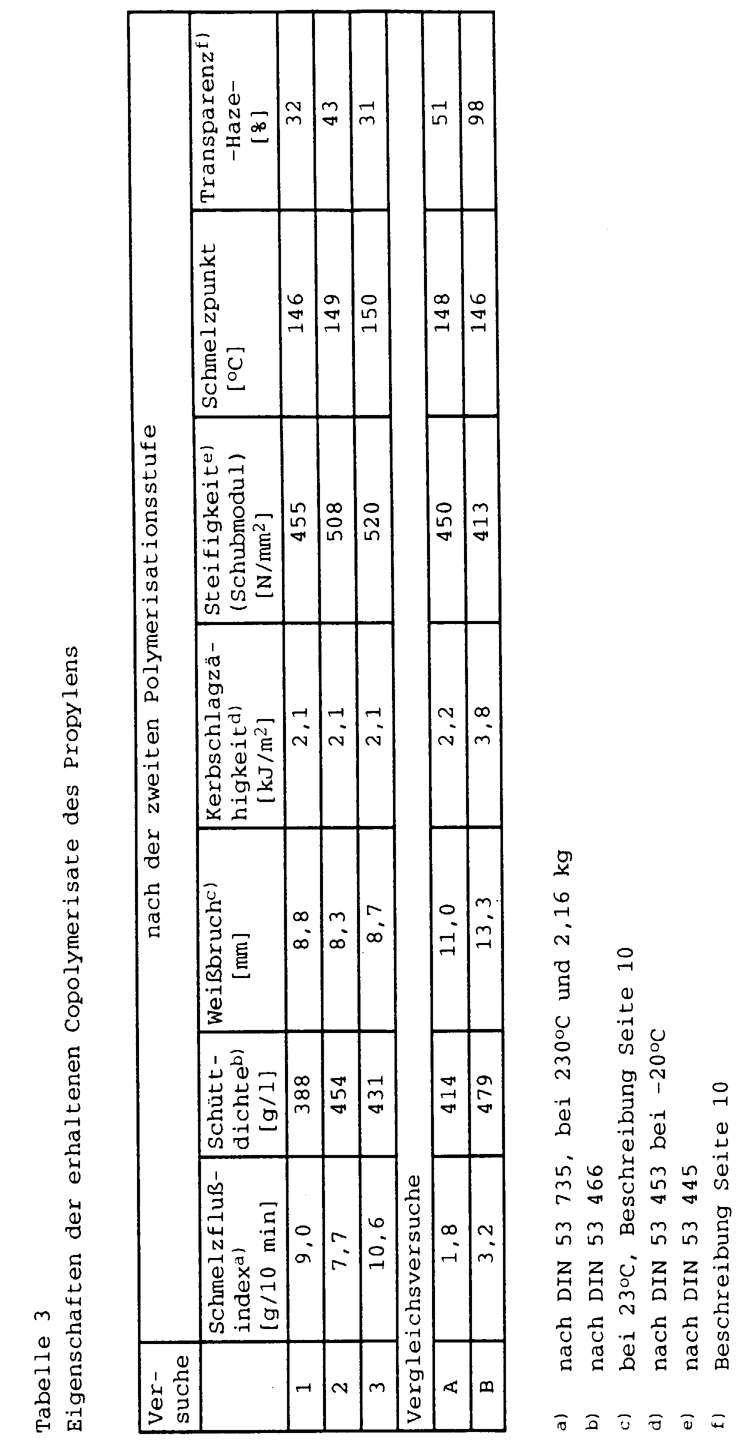

## Patentansprüche

1. Copolymerisate des Propylens mit Alk-1-enen, erhältlich durch zweistufige Polymerisation aus der Gasphase heraus in einem bewegten Festbett, mittels eines Ziegler-Natta-Katalysatorsystems, welches neben einer geträgerten titanhaltigen Feststoffkomponente noch als Cokatalysatoren eine Aluminiumverbindung und eine siliciumorganische Verbindung enthält, wobei man
a) in der ersten Polymerisationsstufe bei einem Druck von 15 bis 40 bar, einer Temperatur von 60 bis 90°C und einer mittleren Verweilzeit des Reaktionsgemisches von 0,7 bis 5 Stunden, Propylen zusammen mit einem weiteren Alk-1-en in Anwesenheit von Wasserstoff polymerisiert und dabei das Verhältnis zwischen dem Partialdruck des Propylens und dem des weiteren Alk-1-ens auf 10:1 bis 500:1, sowie das zwischen dem Partialdruck des Propylens und dem des Wasserstoffs auf 30:1 bis 180:1 einstellt und anschließend
b) in einer zweiten Polymerisationsstufe bei einem Druck von 5 bis 25 bar, wobei dieser Druck wenigstens 3 bar unter dem Druck der ersten Polymerisationsstufe liegt, einer Temperatur von 40 bis 90°C und einer mittleren Verweilzeit des Reaktionsgemisches von 0,7 bis 5 Stunden, dem aus der ersten Polymerisationsstufe ausgebrachten Polymerisat Propylen und weiteres Alk-1-en in Anwesenheit von Wasserstoff hinzupolymerisiert, dabei das Verhältnis der Partialdrücke zwischen Propylen und dem des weiteren Alk-1-ens auf 0,3:1 bis 10:1, und das Gewichtsverhältnis zwischen den in der ersten und den in der zweiten Polymerisationsstufe umgesetzten Monomeren auf 0,5:1 bis 20:1 einstellt, dadurch gekennzeichnet, daß man in der zweiten Polymerisationsstufe das Verhältnis der Partialdrücke zwischen Propylen und Wasserstoff so bemißt, daß es im Bereich von 4:1 bis 1:1 liegt.

2. Copolymerisate nach Anspruch 1, dadurch erhältlich, daß man als Alk-1-en Ethylen verwendet.

3. Copolymerisate nach Anspruch 1, dadurch erhältlich, daß man in der zweiten Polymerisationsstufe als Alk-1-en ein Gemisch aus Ethylen und einem C₄-C₁₀-Alk-1-en verwendet.

4. Copolymerisate nach den Ansprüchen 1 bis 3, dadurch erhältlich, daß man die Polymerisation in der zweiten Polymerisationsstufe in Gegenwart eines C₁-C₈-Alkanols vornimmt.

5. Copolymerisate nach den Ansprüchen 1 bis 4, dadurch erhältlich, daß man als siliciumorganische Verbindung innerhalb des Ziegler-Natta-Katalysatorsystems Dimethoxyisopropylsek.-butylsilan, Dimethoxyisobutylisopropylsilan oder Dimethoxyisobutylsek.-butylsilan verwendet.

6. Copolymerisate nach den Ansprüchen 1 bis 5, dadurch erhältlich, daß man die titanhaltige Feststoffkomponente auf Silicium- und Aluminiumoxiden, Aluminiumsilicaten oder auf Aluminiumphosphat trägert.

7. Verfahren zur Herstellung von Copolymerisaten des Propylens mit Alk-1-enen gemäß den Ansprüchen 1 bis 6, wobei man aus der Gasphase heraus in einem bewegten Festbett mittels eines Ziegler-Natta-Katalysatorsystems, welches neben einer geträgerten titanhaltigen Feststoffkomponente noch als Cokatalysatoren eine Aluminiumverbindung und eine siliciumorganische Verbindung enthält, zunächst in einer ersten Polymerisationsstufe bei einem Druck von 15 bis 40 bar, einer Temperatur von 60 bis 90°C und einer mittleren Verweilzeit des Reaktionsgemisches von 0,7 bis 5 Stunden Propylen zusammen mit einem weiteren Alk-1-en in Anwesenheit von Wasserstoff polymerisiert und dabei das Verhältnis zwischen dem Partialdruck des Propylens und dem des weiteren Alk-1-ens auf 10:1 bis 500:1 sowie das zwischen dem Partialdruck des Propylens und dem des Wasserstoffs auf 30:1 bis 180:1 einstellt und anschließend in einer zweiten Polymerisationsstufe bei einem Druck von 5 bis 25 bar, wobei dieser Druck wenigstens 3 bar unter dem Druck der ersten Polymerisationsstufe liegt, einer Temperatur von 40 bis 90°C und einer mittleren Verweilzeit des Reaktionsgemisches von 0,7 bis 5 Stunden, dem aus der ersten Polymerisationsstufe ausgebrachten Polymerisat Propylen und weiteres Alk-1-en in Anwesenheit von Wasserstoff hinzupolymerisiert und dabei das Gewichtsverhältnis zwischen den in der ersten und den in der zweiten Polymerisationsstufe umgesetzten Monomeren auf 0,5:1 bis 20:1 und in der zweiten Polymerisationsstufe das Verhältnis der Partialdrücke zwischen Propylen und dem des weiteren Alk-1-ens auf 0,3:1 bis 10:1 einstellt, dadurch gekennzeichnet, daß man in der zweiten Polymerisationsstufe das Verhältnis der Partialdrücke zwischen Propylen und Wasserstoff so bemißt, daß es im Bereich von 4:1 bis 1:1 liegt.

8. Verwendung der Copolymerisate des Propylens gemäß den Ansprüchen 1 bis 6 als Folien und Formkörper.

9. Mischungen aus den Copolymerisaten des Propylens nach den Ansprüchen 1 bis 6 und 0,01 bis 1,0 Gew.-Teilen, bezogen auf 100 Gew.-Teile Copolymerisat, eines Nukleierungsmittels.

## Claims

1. A copolymer of propylene with alk-1-enes, obtainable by two-stage polymerization from the gas phase in an agitated fixed bed by means of a Ziegler-Natta catalyst system which, in addition to a supported titanium-containing solid component, also contains, as cocatalysts, an aluminum compound and an organosilicon compound, wherein
a) in the first polymerization stage, propylene is polymerized together with a further alk-1-ene in the presence of hydrogen at from 15 to 40 bar and from 60 to 90°C and in an average residence time of the reactor mixture of from 0.7 to 5 hours, and the ratio of the partial pressure of the propylene to that of the further alk-1-ene is brought to 10 : 1 to 500 : 1 and the ratio of the partial pressure of the propylene to that of the hydrogen is brought to 30 : 1 to 180 : 1, and subsequently,
b) in a second polymerization stage, propylene and a further alk-1-ene are polymerized, in the presence of hydrogen, with the polymer discharged from the first polymerization stage, at from 5 to 25 bar, this pressure being at least 3 bar below the pressure of the first polymerization stage, and at from 40 to 90°C and in an average residence time of the reaction mixture of from 0.7 to 5 hours, the ratio of the partial pressure of propylene to that of the further alk-1-ene is brought to 0.3 : 1 to 10 : 1 and the weight ratio of the monomers reacted in the first polymerization stage to those reacted in the second polymerization stage is brought to 0.5 : 1 to 20 : 1, wherein, in the second polymerization stage, the ratio of the partial pressure of propylene to that of hydrogen is from 4 : 1 to 1 : 1.

2. A copolymer as claimed in claim 1, obtainable using ethylene as the alk-1-ene.

3. A copolymer as claimed in claim 1, obtainable using a mixture of ethylene and a C₄-C₁₀-alk-1-ene as the alk-1-ene in the second polymerization stage.

4. A copolymer as claimed in any of claims 1 to 3, obtainable by carrying out the polymerization in the second polymerization stage in the presence of a C₁-C₈-alkanol.

5. A copolymer as claimed in any of claims 1 to 4, obtainable using dimethoxyisopropyl-sec-butylsilane, dimethoxyisobutylisopropylsilane or dimethoxyisobutyl-sec-butylsilane as the organosilicon compound within the Ziegler-Natta catalyst system.

6. A copolymer as claimed in any of claims 1 to 5, obtainable by supporting the titanium-containing solid component on a silica, an alumina, an aluminum silicate or aluminum phosphate.

7. A process for the preparation of a copolymer of propylene with alk-1-enes as claimed in any of claims 1 to 6, in which, in a first polymerization stage, propylene is first polymerized together with a further alk-1-ene from the gas phase in the presence of hydrogen in an agitated fixed bed by means of a Ziegler-Natta catalyst system which, in addition to a supported titanium-containing solid component, also contains, as cocatalysts, an aluminum compound and an organosilicon compound, at from 15 to 40 bar and from 60 to 90°C and in an average residence time of the reaction mixture of from 0.7 to 5 hours, and the ratio of the partial pressure of the propylene to that of the further alk-1-ene is brought to 10 : 1 to 500 : 1 and the ratio of the partial pressure of the propylene to that of the hydrogen is brought to 30 : 1 to 180 : 1, and subsequently, in a second polymerization stage, propylene and a further alk-1-ene are polymerized, in the presence of hydrogen, with the polymer discharged from the first polymerization stage, at from 5 to 25 bar, this pressure being at least 3 bar below the pressure of the first polymerization stage, and at from 40 to 90°C and in an average residence time of the reaction mixture of from 0.7 to 5 hours, and the weight ratio of the monomers reacted in the first polymerization stage to those reacted in the second polymerization stage is brought to 0.5 : 1 to 20 : 1 and, in the second polymerization stage, the ratio of the partial pressure of propylene to that of the further alk-1-ene is brought to 0.3 : 1 to 10 : 1, wherein, in the second polymerization stage, the ratio of the partial pressure of propylene to that of hydrogen is from 4 : 1 to 1 : 1.

8. Use of the copolymer of propylene as claimed in any of claims 1 to 6 as film or molding.

9. A mixture of a copolymer of propylene as claimed in any of claims 1 to 6 and from 0.01 to 1.0 part by weight, based on 100 parts by weight of copolymer, of a nucleating agent.

## Revendications

1. Copolymères du propylène avec des alc-1-ènes, pouvant être obtenus par polymérisation en deux étapes à partir de la phase gazeuse dans un lit solide en mouvement, au moyen d'un système catalytique de Ziegler-Natta comportant encore, outre un composant solide contenant du titane sur support, comme cocatalyseurs un composé d'aluminium et un composé organo-silicié, tandis que
a) dans la première étape de polymérisation on polymérise du propylène, sous une pression de 15 à 40 bar, à une température de 60 à 90°C et avec une durée de séjour moyenne du mélange réactionnel de 0,7 à 5 heures, conjointement avec un autre alc-1-ène en présence d'hydrogène et on ajuste en outre le rapport entre la pression partielle du propylène et celle de l'autre alc-1-ène à 10:1 à 500:1, ainsi que le rapport entre la pression partielle du propylène et celle de l'hydrogène à 30:1 à 180:1, et ensuite
b) dans une deuxième étape de polymérisation on polymérise, sous une pression de 5 à 25 bar, cette pression se situant à au moins 3 bar en dessous de la pression de la première étape de polymérisation, à une température de 40 à 90°C et avec une durée de séjour moyenne du mélange réactionnel de 0,7 à 5 heures, par addition au polymère issu de la première étape de polymérisation, du propylène et un autre alc-1-àne en présence d'hydrogène, on ajuste en outre le rapport des pressions partielles entre celle du propylène et celle de l'autre alc-1-ène à 0,3:1 à 10:1, et le rapport en poids entre les monomères introduits dans la première étape de polymérisation et ceux introduits dans la deuxième étape de polymérisation à 0,5:1 à 20:1, caractérisé par le fait qu'on contrôle dans la deuxième étape de polymérisation le rapport des pressions partielles entre le propylène et l'hydrogène de telle sorte qu'il se situe dans l'intervalle de 4:1 à 1:1.

2. Copolymères selon la revendication 1, caractérisés par le fait qu'on peut les obtenir en utilisant comme alc-1-ène de l'éthylène.

3. Copolymères selon la revendication 1, caractérisés par le fait qu'on peut les obtenir en utilisant dans la deuxième étape de polymérisation en tant qu'alc-1-ène un mélange d'éthylène et d'un alc-1-ène en C₄-C₁₀.

4. Copolymères selon l'une quelconque des revendications 1 à 3, caractérisés par le fait qu'on peut les obtenir en effectuant la polymérisation dans la deuxième étape de polymérisation en présence d'un alcanol en C₁-C₈.

5. Copolymères selon l'une quelconque des revendications 1 à 4, caractérisés par le fait qu'on peut les obtenir en utilisant comme composé organosilicique dans le système catalytique de Ziegler-Natta du diméthoxyisopropylsecbutylsilane, du diméthoxyisobutylisopropylsilane ou du diméthoxyisobutylsec-butylsilane.

6. Copolymères selon l'une quelconque des revendications 1 à 5, caractérisés par le fait qu'on peut les obtenir en supportant le composant solide contenant du titane sur des oxydes de silicium et d'aluminium, des silicates d'aluminium ou du phosphate d'aluminium.

7. Procédé pour la préparation de copolymères du propylène avec des alc-1-ènes selon l'une quelconque des revendications 1 à 6, dans lequel à partir de la phase gazeuse dans un lit solide en mouvement, au moyen d'un système catalytique de Ziegler-Natta comportant encore, outre un composant solide contenant du titane sur support, comme cocatalyseurs un composé d'aluminium et un composé organo-silicié, d'abord dans une première étape de polymérisation on polymérise du propylène, sous une pression de 15 à 40 bar, à une température de 60 à 90°C et avec une durée de séjour moyenne du mélange réactionnel de 0,7 à 5 heures, conjointement avec un autre alc-1-ène en présence d'hydrogène et on ajuste en outre le rapport entre la pression partielle du propylène et celle de l'autre alc-1-ène à 10:1 à 500:1, ainsi que le rapport entre la pression partielle du propylène et celle de l'hydrogène à 30:1 à 180:1, et ensuite dans une deuxième étape de polymérisation on polymérise, sous une pression de 5 à 25 bar, cette pression se situant à au moins 3 bar en dessous de la pression de la première étape de polymérisation, à une température de 40 à 90°C et avec une durée de séjour moyenne du mélange réactionnel de 0,7 à 5 heures, par addition au polymère issu de la première étape de polymérisation, du propylène et d'un autre alc-1-àne en présence d'hydrogène, on ajuste en outre le rapport en poids entre les monomères introduits dans la première étape de polymérisation et ceux introduits dans la deuxième étape de polymérisation à 0,5:1 à 20:1 et dans la deuxième étape de polymérisation le rapport des pressions partielles entre celle du propylène et celle de l'autre alc-1-ène à 0,3:1 à 10:1, caractérisé par le fait qu'on contrôle dans la deuxième étape de polymérisation le rapport des pressions partielles entre le propylène et l'hydrogène de telle sorte qu'il se situe dans l'intervalle de 4:1 à 1:1.

8. Utilisation des copolymères de propylène selon l'une quelconque des revendications 1 à 6 comme feuilles et comme masses à mouler.

9. Mélanges des copolymères du propylène selon l'une quelconque des revendications 1 à 6 et de 0,01 à 1,0 partie en poids, par rapport à 100 parties en poids de copolymère, d'un agent de nucléation.
